# NOUVEAU FASCICULE DE BREVET EUROPEEN

(11) **EP 2 126 405 B2**
(45) Date de publication et mention de la décision concernant l'opposition: **13.01.2016**
(45) Mention de la délivrance du brevet: 27.03.2013
(21) Numéro de dépôt: 08762175.1
(22) Date de dépôt: 28.02.2008
(51) Int. Cl.: F16F 15/123

(54) **EMBRAYAGE A FRICTION, EN PARTICULIER POUR VEHICULE AUTOMOBILE, A AMORTISSEUR PERFECTIONNE**
REIBKUPPLUNG MIT VERBESSERTER DÄMPFUNG, INSBESONDERE KONZIPIERT FÜR EIN MOTORFAHRZEUG
FRICTION CLUTCH WITH IMPROVED DAMPER, INTENDED, IN PARTICULAR, FOR A MOTOR VEHICLE

(30) Priorité: 02.03.2007 FR 0701517
(43) Date de publication de la demande: 02.12.2009
(73) Titulaire: Valeo Embrayages, 80009 Amiens (FR)
(72) Inventeur: GRATON, Michel, F-75020 Paris (FR); GIROIRE, Jean-Pierre, F-78100 St-Germain-en-Laye (FR)
(74) Mandataire: Jeuland, Mickaël
(86) Numéro de dépôt international: PCT/FR2008/050340
(87) Numéro de publication internationale: WO 2008/119912

(56) Documents cités:
- EP-A1- 0 286 213
- EP-A2- 1 746 307
- DE-A1- 10 325 880
- FR-A1- 2 521 245

## Description

La présente invention concerne un embrayage à friction, en particulier pour véhicule automobile, à amortisseur perfectionné.

Dans un véhicule automobile, un embrayage à friction a pour fonction de transmettre un couple entre un élément rotatif d'entrée et un élément rotatif de sortie, par pincement de la friction entre des plateaux de pression et de réaction liés en rotation avec un volant moteur.

Habituellement, l'élément d'entrée est formé par un disque de friction et l'élément de sortie est lié en rotation, avec ou sans jeu angulaire, à un moyeu lié en rotation avec un arbre d'entrée de boîte de vitesses.

L'embrayage à friction a aussi pour fonction d'assurer la continuité du couple transmis et de filtrer les vibrations en provenance du moteur, notamment grâce à des moyens d'amortissement comportant des organes élastiques, destinés à accumuler de l'énergie lorsque les éléments d'entrée et de sortie se déplacent angulairement l'un par rapport à l'autre, et des moyens de frottement, destinés à dissiper l'énergie accumulée dans les organes élastiques.

On connaît déjà, dans l'état de la technique, un embrayage à friction, en particulier pour véhicule automobile, du type comportant un amortisseur muni d'éléments rotatifs d'entrée et de sortie susceptibles de se déplacer angulairement l'un relativement à l'autre dans des sens direct et rétrograde, l'amortisseur comportant :
- deux rondelles de guidage solidaires en rotation d'un premier élément choisi parmi les éléments d'entrée et de sortie,
- un voile solidaire en rotation d'un second élément parmi ces éléments d'entrée et de sortie,
- des organes élastiques à effet circonférentiel, logés dans des fenêtres ménagées dans les rondelles de guidage et le voile, de façon à solliciter élastiquement ces rondelles de guidage et voile vers une position angulaire relative de repos, les organes élastiques étant logés sans jeu circonférentiel dans les fenêtres des rondelles de guidage lorsque les rondelles de guidage et le voile sont dans leur position relative de repos.

On rappelle que le sens direct est le sens dans lequel l'élément rotatif d'entrée se déplace angulairement relativement à l'élément rotatif de sortie pour entraîner cet élément rotatif de sortie en rotation, et que le sens rétrograde est le sens opposé au sens direct.

Habituellement, les organes élastiques sont répartis en des premier et second groupes d'organes élastiques. Lorsque les rondelles de guidage et le voile sont dans leur position relative de repos, les organes élastiques du premier groupe sont logés sans jeu circonférentiel dans les fenêtres du voile, et les organes élastiques du second groupe sont logés avec jeu circonférentiel dans les fenêtres correspondantes du voile.

Ainsi, les organes élastiques du premier groupe sont activés dès que débute le débattement angulaire entre les rondelles de guidage et le voile, dans le sens direct ou rétrograde, formant ainsi un premier étage d'amortissement. Les organes élastiques du second groupe sont activés lorsque le débattement angulaire entre les rondelles de guidage et le voile atteint une valeur prédéterminée correspondant au jeu circonférentiel des fenêtres du voile, formant ainsi un second étage d'amortissement.

Habituellement, l'amortisseur comporte au moins une rondelle de frottement à activation décalée, agencée entre l'une des rondelles de guidage et le voile, destinée à dissiper l'énergie accumulée dans les organes élastiques lorsque le second étage d'amortissement est activé. Une telle rondelle de frottement comporte deux paires de pattes d'activation, chaque patte d'activation coopérant avec une extrémité d'un organe élastique du second groupe. Ainsi, lorsque le débattement angulaire entre les rondelles de guidage et le voile dépasse la valeur prédéterminée, un contour de la fenêtre du voile dans laquelle est logé l'organe élastique vient coopérer à la fois avec l'une des pattes d'activation et avec l'extrémité correspondante de cet organe élastique. Un frottement est alors généré entre la rondelle de frottement et la rondelle de guidage, afin de dissiper l'énergie accumulée dans l'organe élastique.

Il est connu que les vibrations en provenance du moteur sont différentes selon que les éléments rotatifs d'entrée et de sortie se déplacent angulairement l'un par rapport à l'autre en sens direct ou en sens rétrograde.

Par exemple, dans le cas d'un moteur de type essence, les vibrations provenant du moteur sont négligeables dans le sens direct, et importantes dans le sens rétrograde. Dans le cas d'un moteur de type Diesel, les vibrations provenant du moteur ont un même ordre de grandeur dans les sens direct et rétrograde, les vibrations dans le sens rétrograde étant légèrement supérieures aux vibrations dans le sens direct.

On notera que, du fait des comportements différents des moteurs essence et Diesel, les amortisseurs destinés à des applications essence ou Diesel sont généralement différents. Il est donc nécessaire de développer deux types d'amortisseurs indépendamment l'un de l'autre.

L'invention a notamment pour but de fournir un amortisseur permettant d'optimiser les amortissements des vibrations dans les sens direct et rétrograde, et dont la fiabilité est améliorée par rapport à celle d'un amortisseur de l'état de la technique. L'invention a également pour but de fournir un amortisseur pouvant être adapté à un moteur Diesel ou essence moyennant seulement quelques modifications mineures.

A cet effet, l'invention a pour objet un embrayage à friction du type précité, caractérisé en ce que les organes élastiques sont logés avec jeu circonférentiel dans les fenêtres du voile, de façon que, lorsque les rondelles de guidage et le voile sont dans leur position relative de repos :
- chaque organe élastique coopère avec un contour de la fenêtre du voile dans laquelle il est logé,
- les jeux de deux fenêtres consécutives circonférentiellement sont opposés circonférentiellement.

Puisque chaque organe élastique coopère avec un contour de la fenêtre du voile dans laquelle il est logé, certains organes élastiques, dits organes élastiques d'un premier ensemble, sont activés dès que commence le déplacement angulaire relatif des rondelles de guidage et du voile dans le sens direct (premier étage d'amortissement). Les autres organes élastiques, dits organes élastiques d'un second ensemble, ne sont activés que lorsque le déplacement angulaire relatif des rondelles de guidage et du voile dans le sens direct atteint une valeur prédéterminée correspondant au jeu de la fenêtre (second étage d'amortissement).

A l'inverse, les jeux de deux fenêtres consécutives étant opposés circonférentiellement, ce sont les organes élastiques du second ensemble qui sont activés dès que commence le déplacement angulaire relatif des rondelles de guidage et du voile dans le sens rétrograde (premier étage d'amortissement), et les organes élastiques du premier ensemble ne sont activés que lorsque le déplacement angulaire relatif des rondelles de guidage et du voile dans le sens rétrograde atteint une valeur prédéterminée correspondant au jeu de la fenêtre (second étage d'amortissement).

En d'autres termes, contrairement aux amortisseurs de l'état de la technique, ce sont des organes élastiques différents qui sont activés au premier étage d'amortissement dans le sens direct ou dans le sens rétrograde.

Ainsi, un premier avantage de l'invention consiste en ce qu'il est possible d'optimiser les amortissements des vibrations du moteur dans les sens direct et rétrograde, par exemple en fournissant des organes élastiques tels que la somme des raideurs des organes élastiques du second ensemble est supérieure à la somme des raideurs des organes élastiques du premier ensemble.

Dans ce cas, les vibrations dans le sens rétrograde, généralement plus importantes que les vibrations dans le sens direct, bénéficient d'un meilleur amortissement dès le premier étage d'amortissement.

Par ailleurs, un deuxième avantage de l'invention consiste en ce qu'il est possible d'améliorer la résistance à l'usure d'une rondelle de frottement du second étage d'amortissement, en fournissant une rondelle de frottement à activation décalée liée angulairement avec deux organes élastiques consécutifs circonférentiellement.

En effet, une telle rondelle de frottement est activée, dans les deux sens, au second étage d'amortissement. Or, les jeux de deux fenêtres consécutives étant opposés, les organes élastiques formant le second étage d'amortissement dans les deux sens sont des organes élastiques consécutifs circonférentiellement.

Par exemple, la rondelle de frottement est munie d'au moins une patte d'activation s'étendant angulairement entre deux organes élastiques consécutifs. Une telle patte d'activation est alors considérablement plus large qu'une patte d'activation d'une rondelle de frottement de l'état de la technique. Sa résistance à l'usure est donc meilleure.

Un troisième avantage de l'invention consiste en ce que les jeux des fenêtres ne dépendent que de la forme du voile. Ainsi, il suffit de changer le voile pour changer les jeux, par exemple pour passer d'une application Diesel à une application essence et réciproquement.

Du document FR 2 521 245 A1 est connu un embrayage selon les caractéristiques du préamble de la revendication 1.

L'invention sera mieux comprise à la lecture de la description qui va suivre, donnée uniquement à titre d'exemple et faite en se référant aux dessins annexés dans lesquels :
- la figure 1 est une vue de face d'un embrayage à friction selon un mode de réalisation préféré de l'invention.
- la figure 2 est une vue de face d'une rondelle de frottement de l'embrayage de la figure 1.

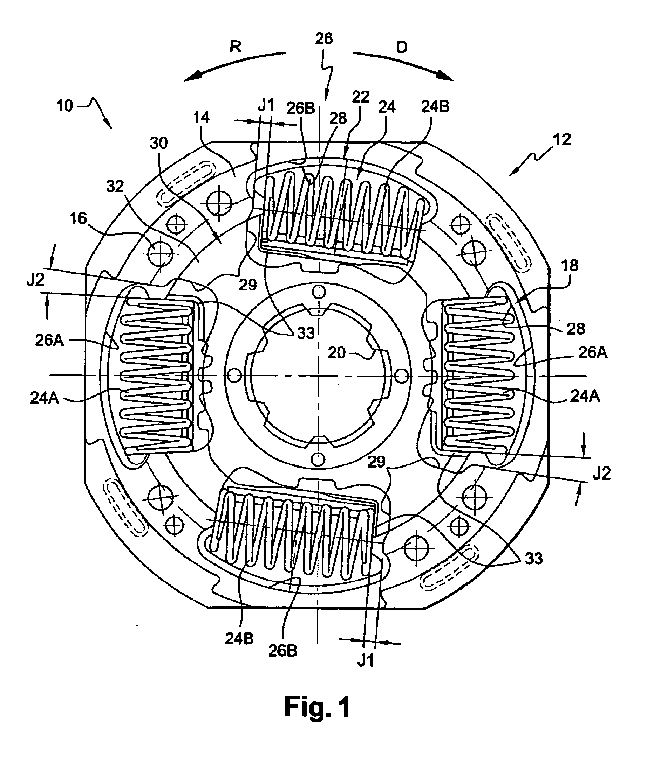

On a représenté sur la figure 1 un embrayage à friction, notamment pour véhicule automobile, selon un mode de réalisation préféré de l'invention.

L'embrayage à friction comprend un dispositif à friction 10 destiné à transmettre un couple entre un volant moteur solidaire en rotation d'un arbre menant, tel que le vilebrequin d'un moteur du véhicule automobile, et un arbre mené, tel que l'arbre d'entrée d'une boîte de vitesses du véhicule automobile. Le dispositif à friction 10 est muni d'un amortisseur principal 12 couplé en série entre des éléments rotatifs d'entrée et de sortie.

L'élément rotatif d'entrée est un disque de friction susceptible d'être lié en rotation avec le volant moteur par pincement entre des plateaux de pression et de réaction liés en rotation avec le volant moteur et actionnés par des moyens embrayeurs.

L'élément rotatif de sortie est un moyeu, de forme générale annulaire, lié en rotation avec l'arbre d'entrée de la boîte de vitesse du véhicule automobile.

L'amortisseur 12 comporte un voile 14, solidarisé en rotation avec le moyeu de sortie à l'aide de moyens de solidarisation 20, tels que des dentures internes du voile 14 coopérant avec une denture externe complémentaire du moyeu.

L'amortisseur 12 comporte également deux rondelles de guidage 18, solidarisées en rotation avec le disque de friction à l'aide de moyens de solidarisation 16 tels que des rivets.

En variante, le voile pourrait être solidarisé avec le disque de friction et les rondelles de guidage solidarisées avec le moyeu.

Le voile 14 et les rondelles de guidage 18 sont couplés entre eux à l'aide de moyens d'amortissements 22 destinés à amortir les vibrations provenant du moteur du véhicule automobile.

Les moyens d'amortissement 22 comprennent des organes élastiques 24 à effet circonférentiel, tels que des ressorts hélicoïdaux de forte raideur, destinés à accumuler de l'énergie lorsque le voile 14 et les rondelles de guidage 18 se déplacent angulairement l'un relativement à l'autre.

Les organes élastiques 24 sont logés dans des fenêtres 26 du voile 14 et dans des fenêtres 28 des rondelles de guidage 18, de façon à solliciter élastiquement ces rondelles de guidage et voile vers une position angulaire relative de repos.

On notera que, lorsque les rondelles de guidage et le voile sont dans leur position relative de repos, les organes élastiques 24 sont logés sans jeu circonférentiel dans les fenêtres 28 des rondelles de guidage 18 et avec jeu circonférentiel J1, J2 dans les fenêtres 26 du voile 14.

Le jeu circonférentiel J1, J2 de chaque fenêtre 26 du voile 14 est tel que chaque organe élastique 24 coopère avec un contour 29 de la fenêtre 26 du voile dans laquelle il est logé, et que les jeux J1, J2 de deux fenêtres 26 consécutives circonférentiellement sont opposés circonférentiellement.

Chaque organe élastique 24 est donc activé dès que débute le débattement angulaire entre les rondelles de guidage 18 et le voile 14 dans un sens, et activé avec un décalage correspondant au jeu J1, J2 de la fenêtre 26 du voile dans laquelle il est logé dans un sens opposé.

Dans chaque sens de déplacement angulaire, les organes élastiques 24 qui sont activés dès que débute le débattement angulaire forment un premier étage d'amortissement, et les organes élastiques 24 qui sont activés avec un décalage forment, en combinaison avec les organes élastiques 24 activés dès que débute le débattement angulaire, un second étage d'amortissement.

On appelle organes élastiques 24A du premier ensemble les organes élastiques formant le premier étage dans un sens direct D, et organes élastiques 24B du second ensemble les organes élastiques formant le premier étage dans un sens rétrograde R.

De préférence, afin d'optimiser l'amortissement des vibrations dans les sens direct D et rétrograde R, au moins deux organes élastiques 24A, 24B consécutifs circonférentiellement ont des raideurs différentes. Par exemple, la somme des raideurs des organes élastiques 24B du second ensemble est supérieure à la somme des raideurs des organes élastiques 24A du premier ensemble. Ainsi, les vibrations du moteur sont amorties différemment aux premiers étages d'amortissement des sens direct D et rétrograde R. L'amortissement est notamment plus important au premier étage dans le sens rétrograde R que l'amortissement au premier étage dans le sens direct D, puisque les vibrations en provenance du moteur sont plus importantes dans le sens rétrograde.

En variante, la somme des raideurs des organes élastiques 24B du second ensemble pourrait être inférieure, ou pourrait être égale, à la somme des raideurs des organes élastiques 24A du premier ensemble.

De préférence également, deux fenêtres 26 du voile consécutives circonférentiellement, appelées première 26A et seconde 26B fenêtres, dans lesquelles sont respectivement logés des organes élastiques des premier et second ensemble, ont des jeux J1, J2 opposés de dimensions circonférentielles différentes. Ainsi, le second étage d'amortissement est activé à un débattement différent dans les sens direct D et rétrograde R. Par exemple, la dimension du jeu J2 de la seconde fenêtre 26B (sens rétrograde) est supérieure à la dimension du jeu J1 de la première fenêtre 26A (sens direct).

En variante, la dimension du jeu J1 de la première fenêtre 26A (sens direct) pourrait être supérieure à la dimension du jeu J2 de la seconde fenêtre 26B (sens rétrograde).

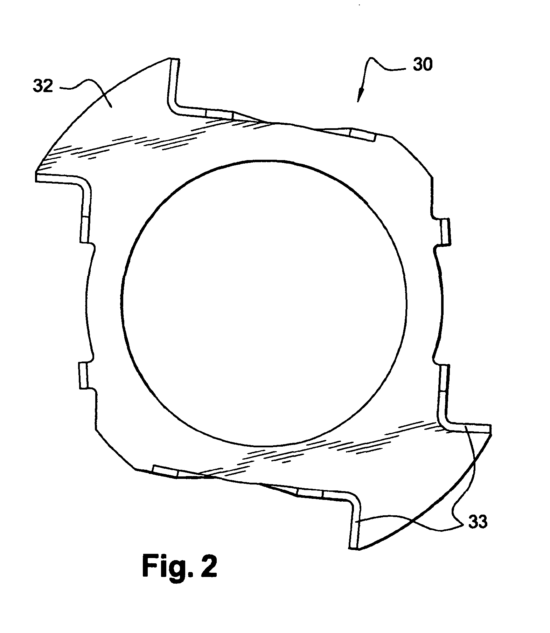

Conformément à l'exemple représenté, les moyens d'amortissement 22 comportent également des organes de frottement destinés à dissiper l'énergie accumulée dans les organes élastiques 24. Les organes de frottement comportent notamment une rondelle de frottement 30 agencée entre le voile 14 et une rondelle de guidage 18. La rondelle de frottement 30 est représentée plus en détail sur la figure 2.

La rondelle de frottement 30 comporte des pattes d'activation 32, de préférence venues de matière avec cette rondelle de frottement 30, destinées à s'étendre entre deux organes élastiques 24A, 24B consécutifs circonférentiellement.

Chaque patte d'activation 32 comporte des premier et second prolongements axiaux 33 d'entraînement de la rondelle de frottement, ces prolongements axiaux 33 étant destinés chacun à s'étendre dans un espace circonférentiel formé par l'un des jeux circonférentiels J1, J2 existant entre l'un des organes élastiques 24A, 24B et l'une des fenêtres 26A, 26B correspondante du voile.

Ainsi, lorsque les éléments rotatifs d'entrée et de sortie se déplacent l'un relativement à l'autre selon le sens direct D, respectivement rétrograde R, l'un des prolongements axiaux 33 est susceptible de coopérer avec l'organe élastique 24A, 24B correspondant, respectivement avec un contour 29 de la fenêtre 26A, 26B correspondante, pour être entraîné dans un sens direct, respectivement rétrograde.

En d'autres termes, lorsque le voile 14 et les rondelles de guidage 18 se déplacent angulairement l'un par rapport à l'autre au delà du jeu J1, J2 de la fenêtre 26A, 26B, le contour 29 de la fenêtre 26A, 26B entraîne la rondelle de frottement 30 en rotation en même temps qu'il active l'organe élastique 24A, 24B logé dans cette fenêtre 26A, 26B. Un frottement est alors généré entre la rondelle de frottement 30 et la rondelle de guidage 18, afin de dissiper l'énergie accumulée dans l'organe élastique 24.

Lorsque le voile 14 et les rondelles de guidage 18 se déplacent angulairement l'un par rapport à l'autre vers leur position de repos, l'organe élastique 24A, 24B entraîne la rondelle de frottement 30 vers une position de repos, dans laquelle la patte d'activation 32 de la rondelle de frottement 30 s'étend entre deux organes élastiques consécutifs 24A, 24B.

## Revendications

1. Embrayage à friction (10), en particulier pour véhicule automobile, du type comportant un amortisseur (12) muni d'éléments rotatifs d'entrée et de sortie susceptibles de se déplacer angulairement l'un relativement à l'autre dans des sens direct (D) et rétrograde (R), l'amortisseur comportant :
- deux rondelles de guidage (18) solidaires en rotation d'un premier élément choisi parmi les éléments d'entrée et de sortie,
- un voile (14) solidaire en rotation d'un second élément parmi ces éléments d'entrée et de sortie,
- des organes élastiques (24, 24A, 24B) à effet circonférentiel, logés dans des fenêtres (26, 26A, 26B, 28) ménagées dans les rondelles de guidage (18) et le voile (14), de façon à solliciter élastiquement ces rondelles de guidage (18) et voile (14) vers une position angulaire relative de repos, les organes élastiques (24, 24A, 24B) étant logés sans jeu circonférentiel dans les fenêtres (28) des rondelles de guidage (18) lorsque les rondelles de guidage (18) et le voile (14) sont dans leur position relative de repos,
les organes élastiques (24, 24A, 24B) sont logés avec jeu circonférentiel (J1, J2) dans les fenêtres (26, 26A, 26B) du voile (14), de façon que, lorsque les rondelles de guidage (18) et le voile (14) sont dans leur position relative de repos :
- chaque organe élastique (24, 24A, 24B) coopère avec un contour (29) de la fenêtre (26, 26A, 26B) du voile dans laquelle il est logé,
- les jeux (J1, J2) de deux fenêtres (26A, 26B) consécutives circonférentiellement sont opposés circonférentiellement,
l'embrayage à friction comporte une rondelle de frottement (30), agencée entre l'une des rondelles de guidage (18) et le voile (14), destinée à dissiper l'énergie accumulée dans les organes élastiques (24, 24A, 24B) activés lorsque les rondelles de guidage (18) et le voile (14) s'éloignent angulairement de leur position relative de repos, la rondelle de frottement (30) étant destinée à coopérer angulairement avec deux organes élastiques (24A, 24B) consécutifs circonférentiellement,
la dite rondelle de frottement (30) est munie d'au moins une patte radiale d'activation (32) destinée à coopérer angulairement avec les deux organes élastiques (24A, 24B) consécutifs circonférentiellement et **caractérisée en ce que** la patte d'activation (32) comporte des premier et second prolongements axiaux (33) d'entraînement de la rondelle de frottement (30), ces prolongements axiaux (33) étant destinés chacun à s'étendre dans un espace circonférentiel formé par l'un des jeux circonférentiels (J1, J2) existant entre l'un des organes élastiques (24A, 24B) et l'une des fenêtres (26A, 26B) correspondante du voile (14) de façon que, lorsque les éléments rotatifs d'entrée et de sortie se déplacent l'un relativement à l'autre selon le sens direct (D), respectivement rétrograde (R), l'un des prolongements axiaux (33) est susceptible de coopérer avec l'organe élastique (24A, 24B) correspondant, respectivement avec un contour (29) de la fenêtre (26A, 26B) correspondante, pour être entraîné dans un sens direct, respectivement rétrograde.

2. Embrayage à friction (10) selon la revendication 1, **caractérisé en ce qu'**au moins deux organes élastiques (24A, 24B) consécutifs circonférentiellement ont des raideurs différentes.

3. Embrayage à friction (10) selon la revendication 2, **caractérisé en ce que** les organes élastiques se répartissent en des premier et second ensembles tels que chaque organe élastique (24A, 24B) du premier, respectivement second, ensemble coopère avec un contour (29) de la fenêtre (26, 26A, 26B) du voile dans laquelle cet organe élastique est logé de façon à être activé dès que les éléments rotatifs d'entrée et de sortie se déplacent angulairement l'un relativement à l'autre dans le sens direct (D), respectivement rétrograde (R), la somme des raideurs des organes élastiques (24B) du second ensemble étant supérieure à la somme des raideurs des organes élastiques (24A) du premier ensemble.

4. Embrayage à friction (10) selon l'une quelconque des revendications précédentes, **caractérisé en ce que** deux fenêtres (26A, 26B) du voile consécutives circonférentiellement ont des jeux (J1, J2) opposés de dimensions circonférentielles différentes.

5. Embrayage à friction (10) selon la revendication 4, **caractérisé en ce que** la dimension du jeu (J2) de la fenêtre (26B) dans le sens rétrograde (R) est supérieure à la dimension du jeu (J1) de la fenêtre (26A) dans le sens direct (D).

6. Embrayage à friction (10) selon la revendication 4, **caractérisé en ce que** la dimension du jeu (J1) de la fenêtre (26A) dans le sens direct (D) est supérieure à la dimension du jeu (J2) de la fenêtre (26B) dans le sens rétrograde (R).

## Patentansprüche

1. Reibungskupplung (10), insbesondere für ein Kraftfahrzeug, der Art, die einen Dämpfer (12) umfasst, der mit einem Eingangsdrehelement und einem Ausgangsdrehelement ausgestattet ist, die geeignet sind, sich relativ zueinander in einer vorwärts (D) und einer rückwärts (R) gewandten Richtung winkelmäßig zu verlagern, wobei der Dämpfer umfasst:
- zwei Führungsscheiben (18), die drehfest mit einem ersten unter dem Eingangselement und dem Ausgangselement ausgewählten Element sind,
- einen Flansch (14), der drehfest mit einem zweiten Element von dem Eingangselement und dem Ausgangselement ist,
- umfangsmäßig wirksame elastische Organe (24, 24A, 24B), die in Fenstern (26, 26A, 26B, 28) untergebracht sind, welche in die Führungsscheiben (18) und den Flansch (14) eingebracht sind, um diese Führungsscheiben (18) und den Flansch (14) in eine relative Winkelruheposition elastisch zu beaufschlagen, wobei die elastischen Organe (24, 24A, 24B) ohne umfangsmäßiges Spiel in den Fenstern (28) der Führungsscheiben (18) untergebracht sind, wenn die Führungsscheiben (18) und der Flansch (14) in ihrer relativen Ruheposition sind,
wobei die elastischen Organe (24, 24A, 24B) mit umfangsmäßigem Spiel (J1, J2) in den Fenstern (26, 26A, 26B) des Flanschs (14) untergebracht sind, damit, wenn die Führungsscheiben (18) und der Flansch (14) in ihrer relativen Ruheposition sind:
- jedes elastische Organ (24, 24A, 24B) mit einer Kontur (29) des Fensters (26, 26A, 26B) des Flanschs zusammenwirkt, in dem es untergebracht ist,
- die Spiele (J1, J2) von zwei umfangsmäßig aufeinander folgenden Fenstern (26A, 26B) umfangsmäßig entgegengesetzt sind,
wobei die Reibungskupplung eine Reibscheibe (30) umfasst, die zwischen einer der Führungsscheiben (18) und dem Flansch (14) angeordnet und dazu bestimmt ist, die in den elastischen Organen (24, 24A, 24B) gespeicherte Energie abzubauen, welche aktiviert werden, wenn die Führungsscheiben (18) und der Flansch (14) sich winkelmäßig von ihrer relativen Ruheposition entfernen, wobei die Reibscheibe (30) dazu bestimmt ist, winkelmäßig mit zwei umfangsmäßig aufeinander folgenden elastischen Organen (24A, 24B) zusammenzuwirken,
wobei die Reibscheibe (30) mit mindestens einer radialen Aktivierungslasche (32) versehen ist, die dazu bestimmt ist, winkelmäßig mit den beiden umfangsmäßig aufeinander folgenden elastischen Organen (24A, 24B) zusammenzuwirken und **dadurch gekennzeichnet, dass** die Aktivierungslasche (32) erste und zweite axiale Verlängerungen (33) zum Antreiben der Reibscheibe (30) umfasst, wobei diese axiale Verlängerungen (33) dazu bestimmt sind, sich jeweils in einem Umfangsraum zu erstrecken, der durch eines der zwischen einem der elastischen Organe (24A, 24B) und einem der Fenster (26A, 26B) des Flanschs (14) existierenden umfangsmäßigen Spiele (J1, J2) gebildet wird, damit, wenn das Eingangsdrehelement und das Ausgangsdrehelement sich relativ zueinander in der vorwärts (D) beziehungsweise rückwärts (R) gewandten Richtung verlagern, eine der axialen Verlängerungen (33) imstande ist, mit dem entsprechenden elastischen Organ (24A, 24B) beziehungsweise mit einer Kontur (29) des Fensters (26A, 26B) zusammenzuwirken, um in einer vorwärts beziehungsweise rückwärts gewandten Richtung angetrieben zu werden.

2. Reibungskupplung (10) nach Anspruch 1, **dadurch gekennzeichnet, dass** mindestens zwei umfangsmäßig aufeinander folgende elastische Organe (24A, 24B) verschiedene Steifigkeiten haben.

3. Reibungskupplung (10) nach Anspruch 2, **dadurch gekennzeichnet, dass** die elastischen Organe sich in eine erste und eine zweite Gruppe aufteilen, derart dass jedes elastische Organ (24A, 24B) der ersten beziehungsweise der zweiten Gruppe mit einer Kontur (29) des Fensters (26, 26A, 26B) des Flanschs zusammenwirkt, in dem dieses elastische Organ untergebracht ist, um aktiviert zu werden, sobald das Eingangsdrehelement und das Ausgangsdrehelement sich relativ zueinander in der vorwärts (D) beziehungsweise rückwärts (R) gewandten Richtung winkelmäßig verlagern, wobei die Summe der Steifigkeiten der elastischen Organe (24B) der zweiten Gruppe größer ist als die Summe der Steifigkeiten der elastischen Organe (24A) der ersten Gruppe.

4. Reibungskupplung (10) nach einem der vorherigen Ansprüche, **dadurch gekennzeichnet, dass** zwei umfangsmäßig aufeinander folgende Fenster (26A, 26B) des Flanschs entgegengesetzte Spiele (J1, J2) mit verschiedenen umfangsmäßigen Abmessungen haben.

5. Reibungskupplung (10) nach Anspruch 4, **dadurch gekennzeichnet, dass** die Abmessung des Spiels (J2) des Fensters (26B) in der rückwärts gewandten Richtung (R) größer ist als die Abmessung des Spiels (J1) des Fensters (26A) in der vorwärts gewandten Richtung (D).

6. Reibungskupplung (10) nach Anspruch 4, **dadurch gekennzeichnet, dass** die Abmessung des Spiels (J1) des Fensters (26A) in der vorwärts gewandten Richtung (D) größer ist als die Abmessung des Spiels (J2) des Fensters (26B) in der rückwärts gewandten Richtung (R).

## Claims

1. Friction clutch (10), particularly for a motor vehicle, of the type comprising a damper (12) equipped with rotary input and output elements which can be displaced angularly relative to one another in the direct (D) and retrograde (R) directions, the damper comprising:
- two retainer plates (18) which are integral in rotation with a first element selected from amongst the input and output elements;
- a flange (14) which is integral in rotation with a second element from amongst these input and output elements;
- spring elements (24, 24A, 24B) with circumferential effect, accommodated in openings (26, 26A, 26B, 28) arranged in the retainer plates (18) and the flange (14), such as to thrust these retainer plates (18) and flange (14) elastically towards a relative angular rest position, the spring elements (24, 24A, 24B) being accommodated without circumferential play in the openings (28) of the retainer plates (18) when the retainer plates (18) and the flange (14) are in their relative rest position,
the spring elements (24, 24A, 24B) are accommodated with circumferential play (J1, J2) in the openings (26, 26A, 26B) of the flange (14) such that, when the retainer plates (18) and the flange (14) are in their relative rest position:
- each spring element (24, 24A, 24B) cooperates with an outline (29) of the opening (26, 26A, 26B) of the flange in which it is accommodated;
- the play (J1, J2) of two circumferentially consecutive openings (26A, 26B) is circumferentially opposite,
the friction clutch comprises a friction washer (30) arranged between one of the retainer plates (18) and the flange (14), which washer is designed to dissipate the energy accumulated in the spring elements (24, 24A, 24B) which are activated when the retainer plates (18) and the flange (14) are displaced angularly from their relative rest position, the friction washer (30) being designed to cooperate angularly with two circumferentially consecutive spring elements (24A, 24B),
said friction washer (30) is provided with at least one radial activation leg (32) which is designed to cooperate angularly with the two circumferentially consecutive spring elements (24A, 24B) and **characterized in that** the activation leg (32) comprises first and second axial continuations (33) to drive the friction washer (30), these axial continuations (33) each being designed to extend in a circumferential space formed by the circumferential play (J1, J2) which exists between one of the spring elements (24A, 24B) and one of the corresponding openings (26A, 26B) of the flange (14), such that, when the rotary input and output elements are displaced relative to one another according to the direct direction (D) and retrograde direction (R) respectively, one of the axial continuations (33) may cooperate with the corresponding spring element (24A, 24B) and respectively with an outline (29) of the corresponding opening (26A, 26B), in order to be driven in a direct or retrograde direction respectively.

2. Friction clutch (10) according to Claim 1, **characterized in that** at least two circumferentially consecutive spring elements (24A, 24B) have different stiffness.

3. Friction clutch (10) according to Claim 2, **characterized in that** the spring elements are divided into first and second assemblies, such that each spring element (24A, 24B) of the first and respectively second assembly cooperates with an outline (29) of the opening (26, 26A, 26B) of the flange in which this spring element is accommodated, so that it is activated as soon as the rotary input and output elements are displaced angularly relative to one another in the direct (D) and retrograde (R) direction respectively, the sum of the stiffness of the spring elements (24B) of the second assembly being greater than the sum of the stiffness of the spring elements (24A) of the first assembly.

4. Friction clutch (10) according to any one of the preceding claims, **characterized in that** two circumferentially consecutive openings (26A, 26B) of the flange have opposite play (J1, J2) with different circumferential dimensions.

5. Friction clutch (10) according to Claim 4, **characterized in that** the dimension of the play (J2) of the opening (26B) in the retrograde direction (R) is greater than the dimension of the play (J1) of the opening (26A) in the direct direction (D).

6. Friction clutch (10) according to Claim 4, **characterized in that** the dimension of the play (J1) of the opening (26A) in the direct direction (D) is greater than the dimension of the play (J2) of the opening (26B) in the retrograde direction (R).
